# EUROPEAN PATENT SPECIFICATION

(11) **EP 1 723 994 B1**
(45) Date of publication and mention of the grant of the patent: **08.09.2010**
(21) Application number: 05709385.8
(22) Date of filing: 27.01.2005
(51) Int. Cl.: A63H 17/26, A63H 17/045, B60G 7/00, B60G 21/055

(54) **SUSPENSION STRUCTURE AND MODEL VEHICLE**
AUFHÄNGUNGSSTRUKTUR UND MODELLFAHRZEUG
STRUCTURE SUSPENSION ET VEHICULE MODELE

(30) Priority: 30.01.2004 JP 2004022575
(43) Date of publication of application: 22.11.2006
(73) Proprietor: Tamiya, Inc., Shizuoka 422-8610 (JP)
(72) Inventor: ARAKI, Shigeki; c/o Tamiya, Inc., Shizuoka 4228610 (JP)
(74) Representative: HOFFMANN EITLE
(86) International application number: PCT/JP2005/001111
(87) International publication number: WO 2005/072843

(56) References cited:
- DE-U1- 20 105 614
- DE-U1- 29 922 520
- GB-A- 1 249 552
- JP-A- 2000 352 411
- JP-U- 56 050 495
- US-A- 4 213 269
- NAKAMURA F. ET AL: 'Bobby-Technique 28, Radio Control Plastic Model.' NIHON HOSO SHUPPAN KYOKAI. 20 April 1978, pages 107 - 110, XP002992123

## Description

### TECHNICAL FIELD

The present invention relates to a suspension structure for use in a model vehicle. More particularly, the present invention relates to a suspension structure having a torsion bar for use in a model tank.

### BACKGROUND ART

A conventional model tank suspension structure utilizes the torsional elasticity of a plate spring that is fitted to a pivot shaft of a swing arm.

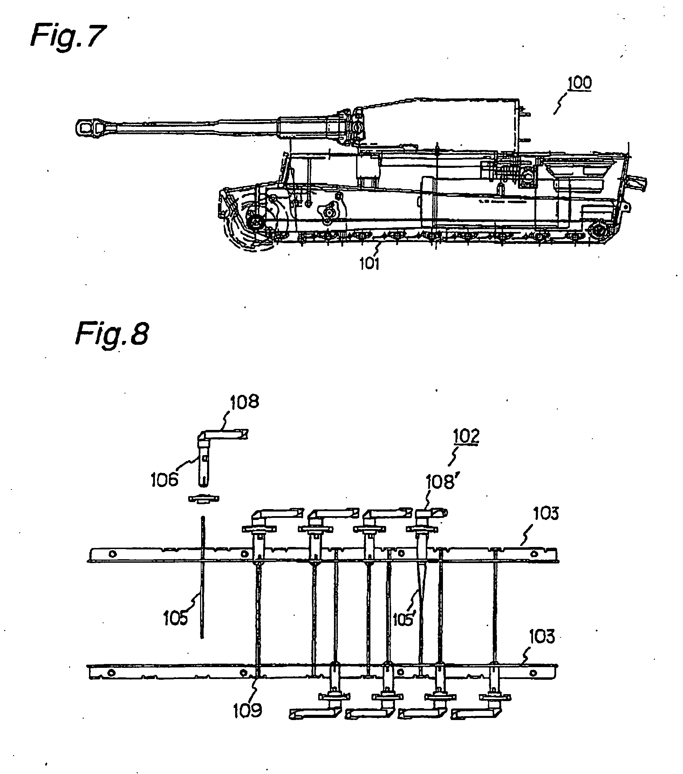

Figs.7 to 9 show a conventional model tank having such a suspension structure. Fig. 7 is a structural side view of a conventional model tank. The vehicle body of a model tank 100 is equipped with tracks, sprocket wheels, road wheels, etc., which are not shown in Fig. 7. The road wheels are attached to the inner surface of the vehicle body bottom 101 through a suspension structure.

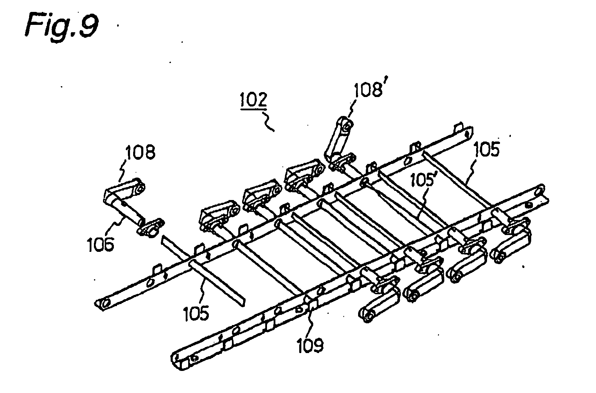

The suspension structure 102 is shown in Figs. 8 and 9. Plate spring securing members 103 each formed into an L-shaped sectional configuration by sheet metal working are disposed parallel to each other and secured to the vehicle body bottom 101. A plurality of metallic plate springs 105 are attached to the plate spring securing members 103 through respective openings provided in the plate spring securing members 103. One end of each plate spring 105 is inserted into a slit of a pivot shaft 106. It should be noted that the other ends of the plate springs 105 are restrained from moving axially by respective stoppers 109 formed on the plate spring securing members 103.

A swing arm 108 is attached to the other end of each pivot shaft 106. A road wheel (not shown) is attached to the distal end of the swing arm 108.

If a force is applied to a road wheel upward from below, the associated swing arm 108 pivots, causing the associated plate spring to be twisted as shown by the plate spring 105'. Consequently, the swing arm 108' rotates to absorb the force.

### DISCLOSURE OF THE INVENTION

### PROBLEM TO BE SOLVED BY THE INVENTION

The conventional suspension structure 102 involves a complicated manufacturing process and takes time and labor to process and assemble the components because the plate spring securing members 103 are made by sheet metal working, and hence suffers from an increase in production cost.

An object of the present invention is to provide a suspension structure for use in a model vehicle that is easy to process and assemble and hence capable of reducing the production cost and also provide a model vehicle.

### MEANS FOR SOLVING THE PROBLEM

To solve the above-described problem, the invention set forth in claim 1 provides a suspension structure 1 for use in a model vehicle. The suspension structure 1 includes a bar-like member 20 having torsional elasticity, one end of the bar-like member 20 being securable to a securing section 75 of a vehicle body 71 of the model vehicle, a pivot shaft 30 attached to the other end of the bar-like member 20, a swing arm 50 attached at the proximal end thereof to the pivot shaft 30, and a wheel (road wheel) 74 attached to the distal end of the swing arm 50.

Further, a first annular section 21 is formed at one end of the bar-like member 20, securable to said securing section 75 being a circular columnar projection section 75 projecting from the vehicle body 71. The first annular section 21 is fittable to the projection section 75, thereby securing, in use, one end of the bar-like member 20 to the vehicle body 71. According to the invention set forth in claim 2, the pivot shaft 30 has a slit 32 into which the other end of the bar-like member 20 is inserted.

According to the invention set forth in claim 3. the bar-like member 20 has at the other end thereof a second annular section 22 that is inserted into the slit 32. According to the invention set forth in claim 4, the suspension structure 1 further includes a securing ring 40 that prevents the second annular section 22 inserted into the silt 32 from falling out of the slit 32.

According to the invention set forth in claim 5, the pivot shaft 30 has a projection (ridge) 31 that prevents the securing ring 40 from falling off the distal end of the pivot shaft 30. According to the invention set forth in claim 6, the suspension structure 1 further includes a securing ring retainer 77 that slidably supports the securing ring 40 with respect to the vehicle body 71.

According to the invention set forth in claim 7, the securing ring retainer 77 has a curved surface that abuts against the securing ring 40. According to the invention set forth in claim 8, the suspension structure 1 further includes a restraining section 76 that restrains the securing ring 40 from moving axially of the pivot shaft 30.

The invention set forth in claim 9 provides a model vehicle 70 having the suspension structure 1. According to the invention set forth in claim 10, the model vehicle 70 has the suspension structure 1 for a right wheel and the suspension structure 1 for a left wheel. The suspension structure 1 for a right wheel and the suspension structure 1 for a left wheel are disposed alternately.

### EFFECTS OF THE INVENTION

The suspension structure and the model vehicle according to the present invention are easy to process and assemble because the component configuration is simple, and hence enable the production cost to be reduced. Unlike the conventional practice, the present invention dispenses with plate springs and press forming dies for forming securing members, which leads to an initial cost reduction.

### BRIEF DESCRIPTION OF THE DRAWINGS

[Fig. 1] is a side view of a model tank having a suspension structure according to the present invention.
[Fig. 2] is an exploded perspective view of the suspension structure according to the present invention.
[Fig. 3] is an exploded side view of the suspension structure according to the present invention.
[Fig. 4] is a top view showing a state where a bar-like member is attached to the bottom of a vehicle body.
[Fig. 5] is a perspective view showing the suspension structure according to the present invention that has been assembled.
[Fig. 6] is a plan view showing the assembled state of the suspension structure according to the present invention.
[Fig. 7] is a structural side view of a conventional model tank.
[Fig. 8] is a plan view of a suspension structure used in the model tank shown in Fig. 7.
[Fig. 9] is a perspective view of the suspension structure shown in Fig. 8.

### Explanation of Reference Numerals:

1: suspension structure
20: bar-like member
21: first annular section
22: second annular section
30: pivot shaft
31: ridge
32: slit
40: securing ring
50: swing arm
60: securing member
70: model tank
71: vehicle body
74: road wheel
75: projection section
77: securing ring retainer
78: restraining section

### BEST MODE FOR CARRYING OUT THE INVENTION

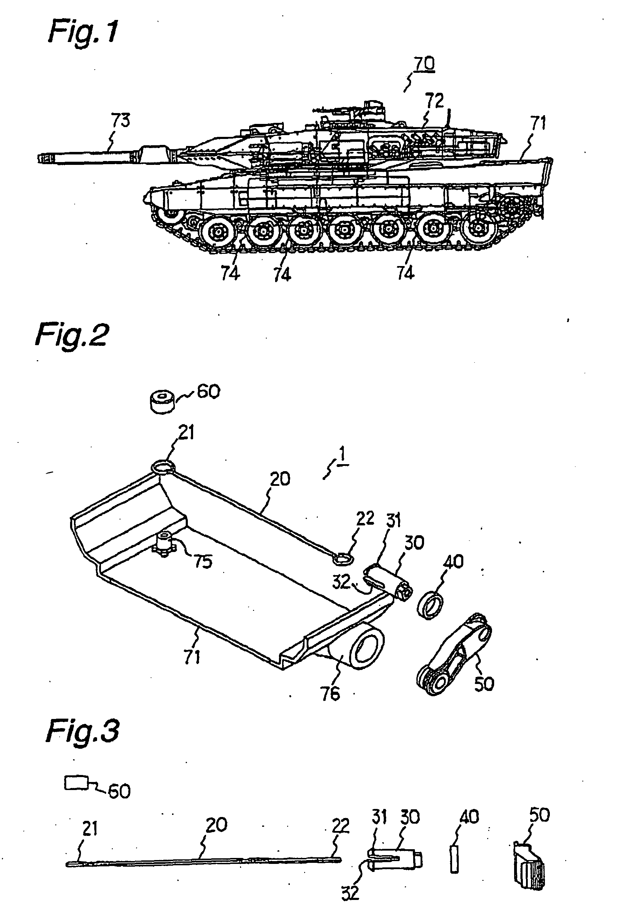

An embodiment of the suspension structure and the model vehicle according to the present invention will be explained below with reference to Figs. 1 to 6. Although in this embodiment the suspension structure is applied to the suspension of a model tank, the present invention is not necessarily limited to model tanks but is also applicable to other model vehicles such as tracked vehicles and automobiles.

Fig. 1 is a side view of a model tank 70 to which the present invention is applied. The model tank 70 is modeled after "Leopard 2". The model tank 70 has a vehicle body 71, a turret 72 rotatably provided on the top of the vehicle body 71, and a gun 73 vertically movably provided on the turret 72. A plurality of road wheels 74 are provided on each side of the vehicle body 71. The suspension structure 1 according to the present invention supports each road wheel 74 vertically movably to serve as a suspension for the road wheel 74.

In the following Figs. 2 and 4 to 6, the vehicle body 71 is shown only at a part thereof in the vicinity of the suspension structure 1. Fig. 2 is an exploded perspective view of the suspension structure 1. The suspension structure 1 according to the present invention is attached to the inner bottom surface of the vehicle body 71, which is made of a resin. A bar-like, member (torsion bar) 20 is formed of a steel wire and has predetermined torsional elasticity. At both ends of the bar-like member 20, the steel wire is bent into an annular shape to form a first annular section 21 and a second annular section 22. A pivot shaft 30 is cylindrical and attached to the second annular section 22. The pivot shaft 30 is formed at one end thereof with a slit 32 into which the second annular section 22 is inserted. The second annular section 22 is secured to the pivot shaft 30 by inserting the second annular section 22 into the slit 32 from one end of the pivot shaft 30.

With the second annular section 22 inserted into the slit 32 from one end of the pivot shaft 30, a metallic securing ring 40 is attached to the pivot shaft 30. The securing ring 40 prevents the second annular section 22 from falling out of the slit 32. The pivot shaft 30 has at one end thereof a ridge 31 provided over the entire circumference to prevent the securing ring 40 from falling off the end of the pivot shaft 30 at which the slit 32 is provided. The ridge 31 abuts against the securing ring 40 to prevent falling off of the securing ring 40. A swing arm 50 is attached at the proximal end thereof to the other end of the pivot shaft 30 so as to pivot within a predetermined range together with the pivot shaft 30. A road wheel 74 (not shown) is rotatably attached to the distal end of the swing arm 50. One side of the vehicle body 71 is formed with a tubular opening 76 that accommodates the pivot shaft 30.

The inner bottom surface of the vehicle body 71, which is made of a resin, is integrally formed with a circular columnar projection section 75 projecting upward from the bottom surface. The outer diameter of the projection section 75 is substantially the same as the inner diameter of the first annular section 21, so that the first annular section 21 is fittable to the projection section 75. In a state where the first annular section 21 is fitted to the projection section 75, a securing member 60 is attached to the distal end of the projection section 75 to prevent falling off of the first annular section 21. The securing member 60 is brought into abutment against the first annular section 21 and secured to the projection section 75 with a screw (not shown). Thus, the first annular section 21 side of the bar-like member 20 is secured to the vehicle body 71.

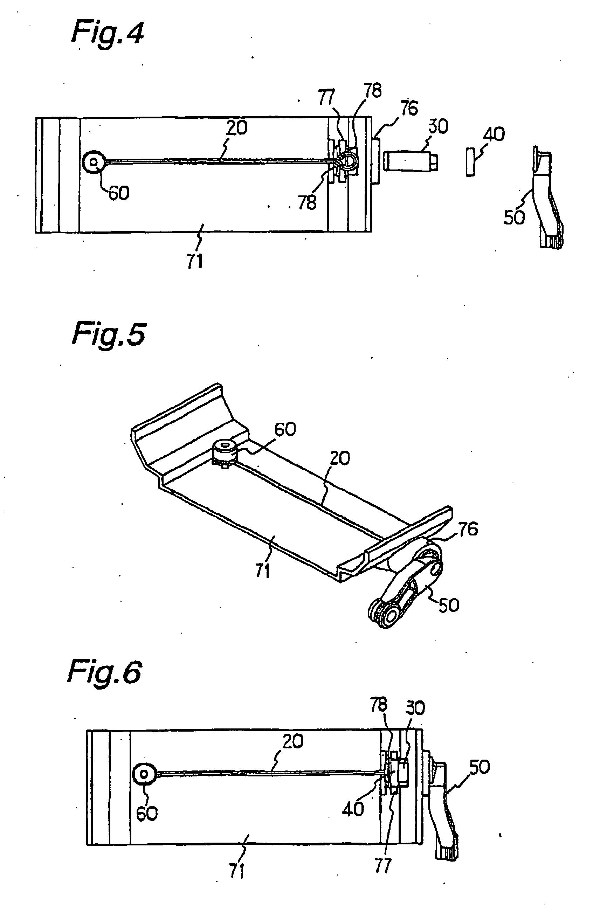

Fig. 4 is a plan view showing a state where one end of the bar-like member 20 is attached to the inner bottom surface of the vehicle body 71. A part of the vehicle body 71 in the vicinity of the tubular opening 76 is integrally formed with a securing ring retainer 77 projecting upward from the vehicle body 71 and having a curved surface that abuts against a curved surface of the securing ring 40. As shown in Fig. 6, the securing ring 40 is slidably supported by the securing ring retainer 77. In addition, a restraining section (restraining wall) 78 is integrally formed with the vehicle body 71 so as to extend perpendicular to both side surfaces of the securing ring retainer 77, i.e. the axial direction of the pivot shaft 30, and abut against the lower portions of both side surfaces of the securing ring 40 to restrain the securing ring 40 from moving axially of the pivot shaft 30.

Pigs. 5 and 6 show the above-described suspension structure 1 installed on the bottom of the vehicle body 71. The swing arm 50 is attached to the bar-like member 20 through the pivot shaft 30. The swing arm 50 is rotatable within a range allowed by the torsional elasticity of the bar-like member 20. Although not shown in either of Figs. 5 and 6, if the road wheel 74 rides over an obstacle during traveling of the model tank, an upward force is applied to the road wheel 74. The force causes the distal end of the swing arm 50 to move upward. That is, the pivot shaft 30 rotates about the bar-like member 20 as an axis of rotation. Consequently, the bar-like member 20 is twisted because one end thereof is fixed to the bottom of the vehicle body 71, thereby absorbing the force applied to the road wheel 74. When the road wheel 74 has passed the obstacle, the applied force disappears. As a result, the bar-like member 20 is deformed so as to untwist, causing the pivot shaft 30 and the swing arm 50 to rotate in the opposite direction to the above. Thus, the road wheel 74 moves downward.

It should be noted that the suspension structure 1 according to the present invention is attached to all the road wheels 74 of the model tank 70 shown in Fig. 1. That is, suspension structures 1 for road wheels 74 attached to the right side of the vehicle body 71 and those for road wheels 74 attached to the left side of the vehicle body 71 are installed on the inner bottom surface of the vehicle body 71 alternately and parallel to each other, although not shown in the figures.

## Claims

1. A suspension structure for use in a model vehicle, comprising:
a bar-like member (20) having torsional elasticity; one end of said bar-like member being securable to a securing section (75) of a vehicle body (71) of said model vehicle;
a pivot shaft(30) attached to the other end of said bar-like member;
a swing arm (50) attached at a proximal end thereof to said pivot shaft; and
a wheel (74) attached to a distal end of said swing arm, **characterized in that** a first annular section (21) is formed at one end of said bar-like member (20), securable to said securing section (75) being a projection section projecting from said vehicle body (71), said first annular section (21) being fittable to said projection section, thereby securing, in use, the one end of said bar-like member to said vehicle body.

2. A suspension structure according to claim 1, wherein said pivot shaft (30) has a slit (32) into which the other end of said bar-like member (20) is inserted.

3. A suspension structure according to claim 2, wherein said bar-like member (20) has at the other end thereof a second annular section (22) that is inserted into said slit (32).

4. A suspension structure according to claim 3, further comprising:
a securing ring (40) that prevents said second annular section (22) inserted into said slit (32) from falling out of said slit.

5. A suspension structure according to claim 4, wherein said pivot shaft (30) has a projection (31) that prevents said securing ring (40) from falling off a distal end of said pivot shaft (30).

6. A suspension structure according to claim 4 or 5, further comprising:
a securing ring retainer (77) that slidably supports said securing ring (40) with respect to said vehicle body (71).

7. A suspension structure according to claim 6, wherein said securing ring retainer (77) has a curved surface that abuts against said securing ring (40).

8. A suspension structure according to any one of claims 4 to 7, further comprising:
a restraining section (76) that restrains said securing ring (40) from moving axially of said pivot shaft (30).

9. A model vehicle having said suspension structure according to any one of claims 1 to 8.

10. A model vehicle according to claim 9, having said suspension structure for a right wheel and said suspension structure for a left wheel, wherein said suspension structure for a right wheel and said suspension structure for a left wheel are disposed alternately.

## Patentansprüche

1. Aufhängungsstruktur für die Verwendung in einem Modellfahrzeug, umfassend:
ein balkenähnliches Element (20), das eine Torsionselastizität aufweist; wobei ein Ende des balkenähnlichen Elements an einem Sicherungsbereich (75) eines Fahrzeugkörpers (71) des Modellfahrzeugs absicherbar ist;
eine Schwenkwelle (30), die an dem anderen Ende des balkenähnlichen Elements angebracht ist;
einen Schwingarm (50), der an seinem proximalen Ende an der Schwenkwelle angebracht ist; und
ein Rad (74), das an einem distalen Ende des Schwingarms angebracht ist,
**dadurch gekennzeichnet, dass**
ein erster ringförmiger Bereich (21) an einem Ende des balkenähnlichen Elements (20) ausgebildet ist, absicherbar an dem Sicherungsbereich (75), der ein Vorsprungsbereich ist, der von dem Fahrzeugkörper (71) hervorspringt, wobei der erste ringförmige Bereich (21) fixirbar an dem Vorsprungsbereich ist, wobei dabei im Gebrauch das eine Ende des balkenähnlichen Elements an dem Fahrzeugkörper abgesichert ist.

2. Aufhängungsstruktur nach Anspruch 1, bei der die Schwenkwelle (30) einen Schlitz (32) aufweist, in den das andere Ende des balkenähnlichen Elements (20) eingesetzt ist.

3. Aufhängungsstruktur nach Anspruch 2, bei der das balkenähnliche Element (20) an seinem anderen Ende einen zweiten ringförmigen Bereich (22) aufweist, der in den Schlitz (32) eingesetzt ist.

4. Aufhängungsstruktur nach Anspruch 3, ferner umfassend:
einen Sicherungsring (40), der den zweiten ringförmigen Bereich (22), der in den Schlitz (32) gesetzt ist, daran hindert, aus dem Schlitz herauszufallen.

5. Aufhängungsstruktur nach Anspruch 4, bei der die Schwenkwelle (30) einen Vorsprung (31) aufweist, der den Sicherungsring (40) daran hindert, dass er von einem distalen Ende der Schwenkwelle (30) abfällt.

6. Aufhängungsstruktur nach Anspruch 4 oder 5, ferner umfassend:
einen Sicherungsringhalter (77), der gleitbar den Sicherungsring (40) in Bezug auf den Fahrzeugkörper (71) lagert.

7. Aufhängungsstruktur nach Anspruch 6, bei der der Sicherungsringbügel (77) eine gekrümmte Oberfläche aufweist, die gegen den Sicherungsring (40) anstößt.

8. Aufhängungsstruktur nach einem der Ansprüche 4 bis 7, ferner umfassend:
einen Haltebereich (76), der den Sicherungsring (40) hält, so dass er sich nicht axial von der Schwenkwelle (30) bewegt.

9. Modellfahrzeug, das eine Aufhängungsstruktur nach einem der Ansprüche 1 bis 8 aufweist.

10. Modellfahrzeug nach Anspruch 9, das die Aufhängungsstruktur für ein rechtes Rad aufweist und das die Aufhängungsstruktur für ein linkes Rad aufweist, bei dem die Aufhängungsstruktur für ein rechtes Rad und die Aufhängungsstruktur für ein linkes Rad abwechselnd angeordnet sind.

## Revendications

1. Structure de suspension pour utilisation dans une maquette de véhicule, comprenant :
un élément semblable à une barre (20) ayant une élasticité de torsion ; une extrémité dudit élément semblable à une barre pouvant être solidement fixée à une section de fixation (75) d'une carrosserie de véhicule (71) de ladite maquette de véhicule ;
un axe de pivot (30) attaché à l'autre extrémité dudit élément semblable à une barre ;
un bras oscillant (50) attaché au niveau d'une extrémité proximale de ce dernier audit axe de pivot ; et
une roue (74) attachée à une extrémité distale dudit bras oscillant, **caractérisée en ce qu'**une première section annulaire (21) est formée au niveau d'une extrémité dudit élément semblable à une barre (20), pouvant être solidement fixée à ladite section de fixation (75) qui est une section en saillie dépassant de ladite carrosserie de véhicule (71), ladite première section annulaire (21) pouvant être ajustée à ladite section en saillie, fixant solidement de ce fait, en fonctionnement, l'extrémité particulière dudit élément semblable à une barre à ladite carrosserie de véhicule.

2. Structure de suspension selon la revendication 1, dans laquelle ledit axe de pivot (30) a une fente (32) dans laquelle l'autre extrémité dudit élément semblable à une barre (20) est insérée.

3. Structure de suspension selon la revendication 2, dans laquelle ledit élément semblable à une barre (20) a, au niveau de l'autre extrémité de ce dernier, une seconde section annulaire (22) qui est insérée dans ladite fente (32).

4. Structure de suspension selon la revendication 3, comprenant en outré :
une bague de sécurité (40) qui empêche ladite seconde section annulaire (22) insérée dans ladite fente (32) de tomber hors de ladite fente.

5. Structure de suspension selon la revendication 4, dans laquelle ledit axe de pivot (30) a une partie en saillie (31) qui empêche ladite bague de sécurité (40) de tomber d'une extrémité distale dudit axe de pivot (30).

6. Structure de suspension selon la revendication 4 ou 5, comprenant en outré :
un dispositif de retenue de bague de sécurité (77) qui supporte de manière coulissante ladite bague de sécurité (40) par rapport à ladite carrosserie de véhicule (71).

7. Structure de suspension selon la revendication 6, dans laquelle ledit dispositif de retenue de bague de sécurité (77) a une surface incurvée qui est contiguë à ladite bague de sécurité (40).

8. Structure de suspension selon l'une quelconque des revendications 4 à 7, comprenant en outré :
une section de limitation (76) qui empêche ladite bague de sécurité (40) de se déplacer de façon axiale par rapport audit axe de pivot (30).

9. Maquette de véhicule ayant ladite structure de suspension selon l'une quelconque des revendications 1 à 8.

10. Maquette de véhicule selon la revendication 9, ayant ladite structure de suspension pour une roue droite et ladite structure de suspension pour une roue gauche, dans laquelle ladite structure de suspension pour une roue droite et ladite structure de suspension pour une roue gauche sont disposées en alternance.
